# EUROPEAN PATENT SPECIFICATION

(11) **EP 0 921 858 B1**
(45) Date of publication and mention of the grant of the patent: **23.10.2002**
(21) Application number: 97935926.2
(22) Date of filing: 05.08.1997
(51) Int. Cl.: B02C 18/40, B02C 23/08, B03B 9/06

(54) **A METHOD AND DEVICE FOR TREATING WASTES**
VERFAHREN UND VORRICHTUNG ZUR AUFBEREITUNG VON ABFÄLLEN
PROCEDE ET DISPOSITIF SERVANT A TRAITER DES DECHETS

(30) Priority: 08.08.1996 SE 9602947
(43) Date of publication of application: 16.06.1999
(73) Proprietor: reCulture Aktiebolag, 113 47 Stockholm (SE)
(72) Inventor: GRUNDITZ, Leif, S-113 47 Stockholm (SE)
(74) Representative: Sedvall, Bengt Gustaf
(86) International application number: SE9701325
(87) International publication number: WO98006498

(56) References cited:
- SE-B- 466 387

## Description

The present invention relates to a method for treating wastes in accordance with the preamble of claim 1 and a device in accordance with the preamble of claim 6.

Such a device is already known from SE-B-466,387, the sewage there passing several treatment steps to separate various fractions to be recovered, burnt or deposited. This known method, however, has in certain application, e.g. in treating domestic wastes, shown to have on one hand problems related to achieve an effective dissolving in the pulper of certain string like waste components, and on the other hand problems related to that heavier waste components are widely spread in the pulp and then are so difficult to separate that residues end in the *wrong* fraction, especially the fraction aimed to be fired, providing an unnecessarily large amount of ashes. The carry-over of these heavier components also provides a drawback in the various treatment steps to follow.

The present invention has the object to propose a method and a device of the kind previously mentioned by which said disadvantages are avoided.

This object is achieved by means of a method and a device as mentioned above with the characteristics of claim 1 and 18, respectively.

By means of a roughly crossing of the arriving waste materials and letting the thus crossed material in a preseparator pass a heavy rejects separation, a rough separation of heavy rejects is achieved, in this connection involving a removal of glass, metals, etc from the material treatment to follow. By means of this presepararion it is essentially avoided that glass, metals, etc are pulverized in the waste treatment to follow and obstruct the separation into fractions. By treating the ground accept from the heavy reject separation in a pulper, providing at least periodically a grinding of the pulper contents in connection with its treatment, the above mentioned problem of the string or wire like components is solved, these components otherwise twisting into hawser or rope like formations being difficult to handle. The components in question consist of i.a. tights and plastic strings. Furthermore, it should be mentioned that the heavy reject separation arranged upstreams of the pulper provides a more effective treatment in the pulper of fibrous components in the waste materials and an effective grinding of the pulper contents in that the load in the grinding step is reduced.

Thus, the characteristics of claim 1 provide downstreams of the pulper an easily treatable suspension, to be possibly separated further into a desired number of fractions. Moreover, a treatment is achieved in the pulper so that composite materials of e.g. paper and plastics are separated and thereby the fibres in the waste materials possibly are freed.

The initial crossing being achieved by means of shredding or cutting, a coarse separation is guaranteed e.g. of plastic waste baskets, glass bottles, glass pots and metal particles might be removed in the then follwoing heavy reject separation step. Typically, a large portion of the heavier components are removed in this first separation step, and one might expect that most of the heavy metal contents in the resulting fraction to be aimed for firing, thus normally are reduced with at least 50 to 70 per cent.

By means of grinding the pulper contents in circulating them by means of a grinding pump, an appropiate solution is achieved, which effectively can treat the materials to avoide a twisting of string like components.

The pH-value in the pulper being modified to 4.5 to 5, the following dehydration is improved and the solving of the clay in the paper components is facilitated, the ash content thereby being reduced in the resulting fuel.

Advantages are achieved with devices in accordance with claims 6 to 9 in connection with the corresponding claims for the method.

Here below, the invention will be described more in detail with an embodiment and in connection with the attached drawings, in which
Figure 1 schematically shows a flow chart of a waste treatment plant according to the invention,
Figure 2 schematically shows a plant for washing plastics, and
Figure 3 shows a plant for handling heavy rejects.

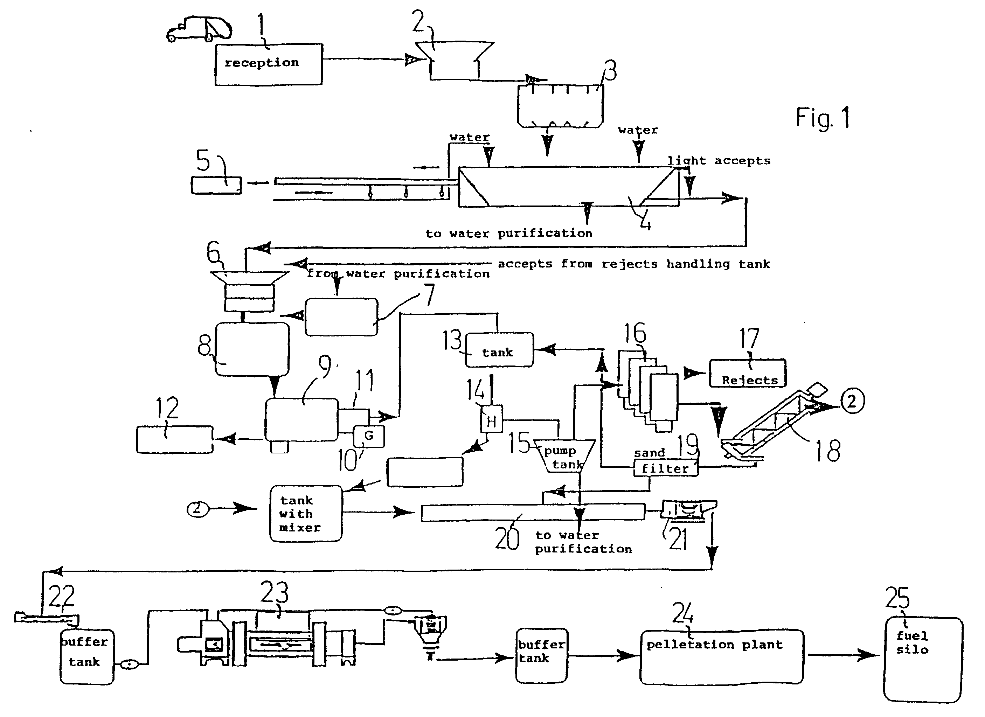

The flow chart shown in figure 1 is based on a station for receiving wastes, such as domestic wastes, industrial wastes or similar. The ariving wastes are via a shredder 2, coarsely shredding or cutting the wastes, and an intermediate stock 3 led to a preseparator 4, in which a heavy reject separation is performed in an aqueous phase. The reject is removed at 5 in the figure. The accepts from the preseparator 4 pass at least one grinding step at 6 and are togehter with water from a water tank 7 via a waste container 8 led to pulper 9. This pulper 9 treats the waste materials so that a far-reaching separation is achieved of complex materials and so that the fibres in the materials are freed.
The plant may also include a source of hot water or steam, said hot water having a temperature of at least 60 ° C. The hot water or steam is delivered to the preseparator 4, and/or to the mill 4, and/or to the pulper 9 thereby to heat these units to a temperature of at least 60 ° C, this temperature being maintained in all following process stages. This arrangement enables the waste to be handled in a completely odorless manner, therewith enabling the illustrated plant to be located in areas which border on housing estates or similar built-up areas. The wet method according to the present invention enables the constituents of the domestic garbage to be separated effectively into their respective fractions. Although the method utilizes large quantities of water, very little water is actually consumed, because the outgoing concentrations in the process only slightly exceed the ingoing concentrations. No contaminated water leaves the process, and all water is recycled in the process.

A circulating line 11 is coupled to the pulper with a grinding pump 10 being designed with a passage, which guarantees the prevention of hawser or rope like formations building up of string like components prevailing in the materials. The pulper is also provided with a device to remove further heavy rejects at 12. The materials completely treated in the pulper are by means of the grinding pump 10 led to a screening device, in the shown embodiment being divided into three process steps, i.e. a coarse screen 14, a cyclone battery 16 and a dehydrating screw 18. The suspension is for an effective treatment in the cyclone battery diluted to a concentration of about 1 percent and the dewatering screw is thickening the suspension to about 4 percent.

The suspension thus obtained is led to a suction filter at 20 and from there to a drying device 23. In case the dried materials are to be used as a fuel pelletizing is performed in a pelletizing plant, and then the pellets are transferred to a fuel stock 25.

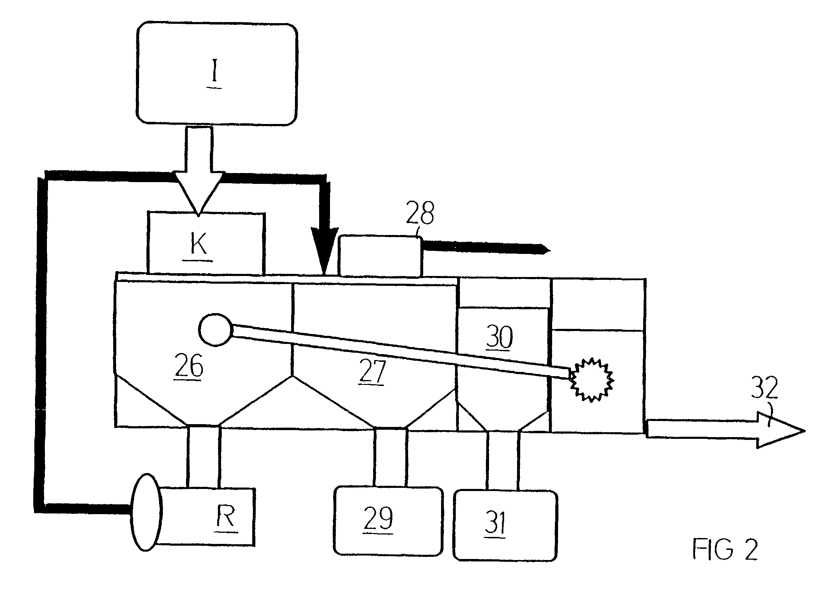

Figure 2 shows schematically an equipment for washing plastics out of the materials, where the reject materials arriving from the coarse screen 14 (figure 1) arc inserted (I) in the plant by means of a refiner K, e.g. a disk refiner. During a first step 26 in the plant, stones, gravels, glass and similar heavy items are separated to be treated in a refiner R and transported to a second step 27 in the plant. During this second step a surface scraping of the plastics is performed and a removal of heavy rejects at 31, the accepts then being recirculated from this plant to the pulper 9 (figure 1).

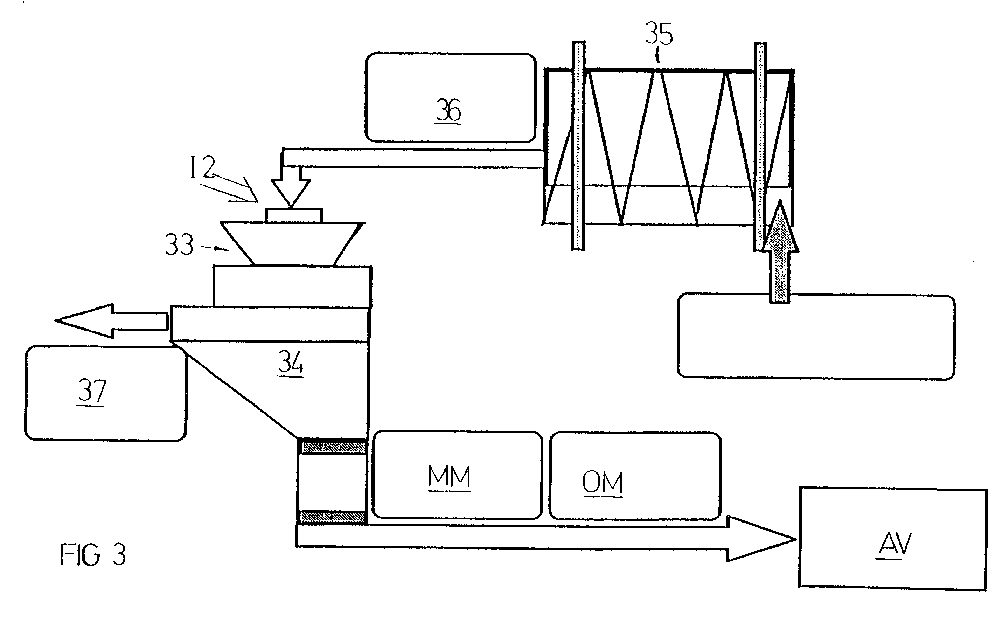

Figure 3 shows schematically the handling of the heavy rejects, the reject from the preseparator 4 and the pulper 9 being transported at I2 to a fine refiner 33 together with materials residuing from a tumbler 35 after recovering magnetic metals at 36. In the tumbler 35 consisting of a partly waterfilled rotative drum, a further splitting is performed and a dissolving of organic materials. These materials are from the fine refiner 33 transported to a floatation plant 34 for sedimentation and floatation. The accept, in this case being residuing organic materials are recirculated via 37 into the process via the refiner upstreams of the pulper 9. The rejects consisting of glass, gravels, stones as well as metals are transported to a plant for recovering both magnetic (MM) and non-magnetic (OM) metal particles, and the residues might after a dehydration AV been used as e.g. loading materials.

The invention is only restricted by what is stated in the claims to follow and the description has merely to be considered as examplifying. Thus, the method stated in the main claims might be used without any washing of the plastics and handling of the heavy rejects in accordance with what has been stated above.

## Claims

1. A method for treating wastes, such as domestic wastes, industrial wastes and similar, the wastes passing several treatment steps and thereafter separated in various fractions, **characterized in that** it consists of at least the following steps:
- a coarse crossing of the received waste materials,
- a separation of heavy rejects of the waste materials in a aqueous phase and a removal of the rejects for further treatments,
- a grinding of the accepts from the heavy reject separation and a transport of the ground materials and the fluid to a pulper,
- a dissolving of these materials in the pulper with a simultaneous, at least periodic grinding,
- a separation of the suspension completely treated in the pulper into various fractions, and
- a transport and a further treatment of the created fractions.

2. A method according to claim 1, **characterized in that** the coarse crossing is performed by means of shredding or cutting.

3. A method according to claim 1 or 2, **characterized in that** the grinding of the pulper contents is achieved simultaneously with its treatment in the pulper by means of circulating the pulper contents by means of a grinding pump.

4. A method according to anyone of the preceding claims, **characterized in that** the heavy rejects separation is performed in a floatation step (34) preceded by a fine grinding step (33).

5. A method according to anyone of the preceding claims, **characterized in that** the pH-value of the pulper contents is modified to be 4,5 to 5.

6. A method according to any one of the preceding claims, **characterized of** heating the waste material to at least 60 ° C.

7. A method according to claim 6, **characterized of** heating the waste material by delivering hot water or steam to the separation step and/or grinding step and/or to the pulper.

8. A device for treating wastes, such as domestic wastes, industrial wastes and similar, the device comprising several treatment stations for separating the wastes into various fractions, **characterized in that** that it comprises:
- a crossing device (2) for a coarse crossing of the received waste materials,
- a heavy rejects separator (4) for a preseparation in an aqueous phase of the waste materials and a removal of the rejects for further treatments,
- a first grinding device (6) for grinding the accepts from the heavy rejects separator,
- a pulper (9) to receive the ground materials and the fluid (7) and to dissolve the materials during a simultaneous, at least periodic grinding in a second grinding device (10),
- a device (14, 16, 18) for separating the suspension completely treated in the pulper (9) into various fractions, and
- means for removing and for further treatments of the received fractions.

9. A device according to claim 8, **characterized in that** the crossing device (2) consists of a shredding or cutting device.

10. A device according to claim 8 or 9, **characterized in that** the second grinding device consists of a grinding pump (10) connected by means of a circulating line (11) to the pulper (9).

11. A device according to anyone of the claims 8 to 10, **characterized in that** the heavy rejects separator includes a floatation plant (34) preceded by a fine grinding mill (33).

## Patentansprüche

1. Verfahren zum Behandeln von Abfällen, wie zum Beispiel Hausabfällen, Industrieabfällen und Ähnlichem, wobei die Abfälle mehrere Behandlungsschritte durchlaufen und hiernach in unterschiedliche Fraktionen getrennt werden,
**dadurch gekennzeichnet,**
**dass** es mindestens aus folgenden Schritten besteht:
- ein Grobzerkleinern der erhaltenen Abfälle,
- ein Trennen von schweren Rückstanden der Abfälle in einer wässrigen Phase und ein Entfernen der schweren Rückstände für weitere Behandlungen,
- ein Feinzerkleinern der Gutstoffe aus der Trennung der schweren Rückstände und ein Transportieren des feinzerkleinerten Materials und des Fluids zu einem Pulper,
- ein Lösen dieser Materialien in dem Pulper mit einem gleichzeitigen, zumindest periodischen Feinzerkleinern,
- ein Trennen der im Pulper vollständig behandelten Suspension in mehrere Fraktionen und
- ein Transportieren und ein weiteres Behandeln der erzeugten Fraktionen.

2. Verfahren gemäß Anspruch 1, **dadurch gekennzeichnet, dass** das Grobzerkleinern mittels Schredderns oder Schneidens durchgeführt wird.

3. Verfahren gemäß Anspruch 1 oder 2, **dadurch gekennzeichnet,**
**dass** das Feinzerkleinern des Inhalts des Pulpers gleichzeitig mit seinem Behandeln im Pulper mittels Zirkulierns des Inhalts des Pulpers mittels einer Feinzerkleinerungspumpe erreicht wird.

4. Verfahren gemäß einem der vorhergehenden Ansprüche,
- **dadurch gekennzeichnet,**
**dass** das Trennen der schweren Rückstande in einem Floatations-Schritt (34) durchgeführt wird, dem ein Feinzerkleinerungs-Schritt (33) vorausgeht.

5. Verfahren gemäß einem der vorhergehenden Ansprüche, **dadurch gekennzeichnet,**
**dass** der pH-Wert des Pulperinhalts auf 4,5 bis 5 modifiziert wird.

6. Verfahren gemäß einem der vorhergehenden Ansprüche, **gekennzeichnet durch** Erhitzen des Abfallmaterials auf mindestens 60°C.

7. Verfahren gemäß einem der vorhergehenden Ansprüche, **gekennzeichnet durch** Erhitzen des Abfallmaterials mittels Zugebens von heißem Wasser oder Dampf zum TrennungsSchritt und/oder zum Zerkleinerungs-Schritt und/oder an den Pulper.

8. Vorrichtung zum Behandeln von Abfällen, wie zum Beispiel Hausabfällen, Industrieabfällen und Ähnlichem, wobei die Vorrichtung mehrere Behandlungsstationen zum Trennen der Abfälle in unterschiedliche Fraktionen hat, **dadurch gekennzeichnet,**
**dass** sie aufweist:
- eine Zerkleinerungs-Vorrichtung (2) für eine Grobzerkleinerung der erhaltenen Abfallmaterialien,
- einen Schwerrückstände-Separator (4) zum Vortrennen der Abfallmaterialien in einer wässrigen Phase und zum Entfernen der Rückstande für weitere Behandlungen,
- eine erste Feinzerkleinerungs-Vorrichtung (6) zum Feinzerkleinern der Gutstoffe aus dem Schwerrückstände-Separator,
- einen Pulper (9), um die feinzerkleinerten Materialien und das Fluid (7) aufzunehmen und um die Materialien während eines gleichzeitigen, zumindest periodischen Feinzerkleinerns in einer zweiten Feinzerkleinerungs-Vorrichtung (10) zu lösen,
- eine Vorrichtung (14, 16, 18) zum Trennen der im Pulper(9) vollständig behandelten Suspension in unterschiedliche Fraktionen und
- Mittel zum Entfernen und weiteren Behandeln der aufgenommenen Fraktionen.

9. Vorrichtung gemäß Anspruch 8, **dadurch gekennzeichnet,**
**dass** die Grobzerkleinerungs-Vorrichtung (2) aus einer Schredder- oder Schneide-Vorrichtung besteht.

10. Vorrichtung gemäß Anspruch 8 oder 9, **dadurch gekennzeichnet,**
**dass** die zweite Feinzerkleinerungs-Vorrichtung aus einer Feinzerkleinerungs-Pumpe (10) besteht, die mittels einer Zirkulationsleitung (11) mit dem Pulper (9) verbunden ist.

11. Vorrichtung gemäß einem der Ansprüche 8 bis 10, **dadurch gekennzeichnet,**
**dass** der Schwerrückstände-Separator eine Floatationsanlage (34) hat, welcher eine Feinzerkleinerungsmühle (33) vorausgeht.

## Revendications

1. Procédé pour traiter des déchets, tels que des déchets domestiques, des déchets industriels et similaires, les déchets passant par plusieurs étapes de traitement, et étant ensuite séparés en différentes fractions,
**caractérisé en ce qu'**il comporte au moins les étapes suivantes consistant à :
- mélanger de manière grossière les matériaux de déchets reçus,
- séparer les déchets rejetés lourds des matériaux de déchets dans une phase aqueuse, et enlever les déchets rejetés pour des traitements supplémentaires,
- broyer les déchets acceptés à partir de la séparation de rejets lourds, et transporter les matériaux broyés et le fluide vers un triturateur,
- dissoudre ces matériaux dans le triturateur à l'aide d'un broyage simultané au moins périodique,
- séparer la suspension entièrement traitée dans le triturateur en différentes fractions, et
- transporter et traiter de manière supplémentaire les fractions créées.

2. Procédé selon la revendication 1, **caractérisé en ce que** l'étape consistant à mélanger de manière grossière est effectuée par l'intermédiaire d'un déchiquetage ou d'une découpe.

3. Procédé selon la revendication 1 ou 2, **caractérisé en ce que** le broyage des contenus du triturateur est obtenu simultanément au traitement dans le triturateur par l'intermédiaire d'une étape consistant à faire circuler les contenus du triturateur par l'intermédiaire d'une pompe de broyage.

4. Procédé selon l'une quelconque des revendications précédentes, **caractérisé en ce que** la séparation des déchets rejetés lourds est effectuée lors d'une étape de flottaison (34) précédée par une étape de broyage précis (33).

5. Procédé selon l'une quelconque des revendications précédentes, **caractérisé en ce que** la valeur de pH des contenus du triturateur est modifiée. pour être de 4,5 à 5.

6. Procédé selon l'une quelconque des revendications précédentes, caractérisé en chauffant des matériaux de déchets reçus au moins à 60 °C.

7. Procédé selon la revendication 6, caractérisé en chauffant des matériaux de déchets reçus par des conduites d'eau chaude ou de vapeur à l'étape de séparation et/ou à l'étape du broyage et/ou au triturateur.

8. Dispositif pour traiter des déchets, tels que des déchets domestiques, des déchets industriels et similaires, le dispositif comportant plusieurs postes de traitement pour séparer les déchets en différentes fractions, **caractérisé en ce qu'**il comporte :
- un dispositif de mélange (2) pour mélanger de manière grossière des matériaux de déchets reçus,
- un séparateur de rejets lourds (44) pour une séparation préalable dans une phase aqueuse des matériaux de déchets, et pour un enlèvement des déchets rejetés pour des traitements supplémentaires,
- un premier dispositif de broyage (6) pour broyer les déchets acceptés à partir du séparateur de déchets rejetés lourds,
- un triturateur (9) destiné à recevoir les matériaux broyés et le fluide (7), et à dissoudre les matériaux pendant un broyage simultané au moins périodique dans un second dispositif de broyage (10),
- un dispositif (14, 16, 18) pour séparer la suspension traitée entièrement dans le triturateur (9) en différentes fractions, et
- des moyens pour enlever et traiter de manière supplémentaire les fractions reçues.

9. Dispositif selon la revendication 8, **caractérisé en ce que** le dispositif de mélange (2) est constitué d'un dispositif de déchiquetage ou de découpe.

10. Dispositif selon la revendication 8 ou 9, **caractérisé en ce que** le second dispositif de broyage est constitué d'une pompe de broyage (10) reliée par l'intermédiaire d'une conduite de mise en circulation (11) au triturateur (9).

11. Dispositif selon l'une quelconque des revendications 8 à 10, **caractérisé en ce que** le séparateur de déchets rejetés lourds comporte une installation de mise en flottaison (34) précédée par un broyeur précis (33).
